# EUROPÄISCHE PATENTSCHRIFT

(11) **EP 1 763 643 B1**
(45) Veröffentlichungstag und Bekanntmachung des Hinweises auf die Patenterteilung: **11.03.2009**
(21) Anmeldenummer: 05766606.7
(22) Anmeldetag: 30.06.2005
(51) Int. Cl.: F16D 48/02

(54) **HYDRAULIKKREIS FüR EIN DOPPELKUPPLUNGSGETRIEBE**
HYDRAULIC CIRCUIT FOR A DUAL CLUTCH TRANSMISSION
CIRCUIT HYDRAULIQUE DESTINE A UNE BOITE E VITESSES A DOUBLE EMBRAYAGE

(30) Priorität: 02.07.2004 DE 102004033362
(43) Veröffentlichungstag der Anmeldung: 21.03.2007
(73) Patentinhaber: GETRAG Getriebe- und Zahnradfabrik Hermann Hagenmeyer GmbH & Cie KG, 74199 Untergruppenbach (DE)
(72) Erfinder: KOHLHAAS, Stefan, 52070 Aachen (DE); VOSS, Thomas, 31061 Alfeld (DE)
(74) Vertreter: Steil, Christian
(86) Internationale Anmeldenummer: PCT/EP2005/007024
(87) Internationale Veröffentlichungsnummer: WO 2006/002904

(56) Entgegenhaltungen:
- FR-A- 2 837 431
- GB-A- 880 128
- US-A- 3 391 767

## Beschreibung

Die vorliegende Erfindung betrifft einen Hydraulikkreis für ein Doppelkupplungsgetriebe für Kraftfahrzeuge gemäß dem Oberbegriff des Anspruchs 1 (US 3,391,767 A), mit einer ersten und einer zweiten hydraulisch betätigbaren Kupplung sowie einem ersten und einem zweiten Druckregelventil zum Regeln des Kupplungsdruckes der ersten bzw. der zweiten Kupplung.

Ein weiterer Hydraulikkreis ist bekannt aus der DE 101 34 115 A1.

Doppelkupplungsgetriebe für Kraftfahrzeuge haben in jüngster Zeit besonderes Interesse hervorgerufen. Sie basieren auf dem Grundkonzept herkömmlicher manueller Schaltgetriebe, weisen jedoch zwei Trennkupplungen auf. Die eine Trennkupplung verbindet eine Motorabtriebswelle mit einem ersten Getriebezweig, der bspw. die Gangstufen 1, 3, 5, ... beinhaltet. Die zweite Trennkupplung verbindet die Motorabtriebswelle mit einem zweiten parallelen Getriebezweig, der bspw. die Getriebestufen 2, 4, 6, ... beinhaltet.

Die Abtriebe der zwei Getriebezweige sind mit einer gemeinsamen Ausgangswelle verbunden, die mit den Antriebsrädern des Kraftfahrzeuges verbunden ist.

Durch überschneidendes Betätigen der Trennkupplungen ist es möglich, Gangwechsel von benachbarten Gangstufen überschneidend ohne Zugkraftunterbrechung durchzuführen. Hierdurch sind Doppelkupplungsgetriebe sehr komfortabel. Da die Kraftübertragung reib- bzw. formschlüssig erfolgt, kann gleichzeitig ein vergleichsweise hoher Wirkungsgrad erzielt werden.

Doppelkupplungsgetriebe können in der Regel nur automatisiert betrieben werden. Dabei sind besondere Sicherheitsvorkehrungen zu treffen, um zu vermeiden, dass zwei Gangstufen gleichzeitig eingelegt und über die Trennkupplungen gleichzeitig belastet werden. Dies könnte zu einer Zerstörung der Radsätze und/oder der Trennkupplungen führen. Die Trennkupplungen sind dabei in der Regel hydraulisch gesteuerte Kupplungen. Zwar können die Trennkupplungen als Trockenkupplungen ausgebildet sein. Es ist jedoch vorteilhaft, wenn die Trennkupplungen als Nasskupplungen, insbesondere als Nass-Lamellenkupplungen ausgebildet sind.

Aus der eingangs genannten DE 101 34 115 A1 ist ein Hydraulikkreis zur hydraulischen Steuerung eines Doppelkupplungsgetriebes bekannt. Dabei weist der Hydraulikkreis einen ersten Teilkreis für die erste Trennkupplung und den ersten Getriebezweig sowie einen zweiten Teilkreis für die zweite Trennkupplung und den zweiten Getriebezweig auf. Die Teilkreise sind eingangsseitig jeweils über Freigabeventile mit einer Hydraulikversorgung verbunden. Die Freigabeventile sind dabei als "fail-safe"-Ventile ausgebildet. Im Normalbetrieb werden die Freigabeventile elektrisch freigegeben. Bei Ausfall der elektrischen Steuerung werden die Freigabeventile durch Federn in eine Trennposition verfahren, in der die Teilkreise von der Hydraulikversorgung getrennt sind. Gleichzeitig werden die hydraulischen Teilkreise drucklos geschaltet, indem sie mit einem Tank verbunden werden. Hierdurch werden die zwei Trennkupplungen geöffnet. Das Fahrzeug rollt im Falle des Auftretens eines solchen Fehlers somit aus und bleibt dann stehen.

Aus der DE 101 38 395 A1 ist eine Notbetätigungsvorrichtung für eine automatisierte steuerbare Kupplung bekannt, die passiv schließbar ausgebildet ist. Dabei weist die Notbetätigungsvorrichtung einen Druckspeicher als Hilfsenergiespeicher zur Notbetätigung auf.

Ferner ist es aus der DE 101 20 882 bekannt, durch eine Anordnung aus zwei Rückschlagventilen und einem Druckbegrenzungsventil dafür zu sorgen, dass ein auf die Kupplungen wirkender Druck einen Maximalwert nicht übersteigt.

Das der Erfindung zu Grunde liegende Problem besteht vor diesem Hintergrund darin, einen verbesserten Hydraulikkreis für ein Doppelkupplungsgetriebe anzugeben, wobei die Sicherheit beim Auftreten von Fehlern deutlich erhöht ist.

Diese Aufgabe wird durch einen Hydraulikkreis für Doppelkupplungsgetriebe gemäß Anspruch 1 gelöst, wobei ein Zentralventil in einer ersten Stellung die Druckregelventile mit den jeweiligen Kupplungen verbindet und in einer zweiten Stellung die Druckregelventile von den jeweiligen Kupplungen trennt.

Durch ein solches Zentral- bzw. Absperrventil können bei Auftreten eines Fehlers beide Kupplungen von ihren Regelventilen quasi gleichzeitig getrennt werden. Hierdurch ergibt sich ein erhöhter Freiheitsgrad hinsichtlich der weiteren Behandlung eines Fehlers.

So ist es durch das Zentralventil generell möglich, bei Auftreten eines Fehlers beide Kupplungen sofort gleichzeitig drucklos zu schalten, wie es bei der eingangs genannten DE 101 34 115 A1 mittels zweier vorgeschalteter Freigabeventile gelöst ist.

Besonders bevorzugt ist es jedoch, wenn mittels des Zentralventils in einem Notlaufbetrieb die Kupplungen zwar von ihren Druckbegrenzungsventilen getrennt werden, gleichzeitig jedoch ein Notfallbetrieb eingerichtet wird, bei dem bspw. eine der zwei Kupplungen weiterhin mit Druck versorgt wird. Hierdurch kann verhindert werden, dass bei Auftreten eines Fehlers dem Fahrer abrupt keine Antriebskraft mehr zur Verfügung steht. Dies könnte im Falle eines Überholmanövers oder Ähnliches sicherheitskritisch sein. Statt dessen kann die unter Druck gehaltene Kupplung im Notlaufbetrieb dafür sorgen, dass bspw. ein bereits eingeleitetes Überholmanöver, währenddessen der Fehler auftritt, noch abgeschlossen werden kann. Demzufolge kann die Fahrsicherheit insgesamt deutlich erhöht werden.

Das der Erfindung zu Grunde liegende Problem wird auf diese Weise vollkommen gelöst.

Vorzugsweise ist das Zentralventil ein Wegeventil.

Auf diese Weise lässt sich das Zentralventil als Absperrventil bzw. Absperrschieber besonders einfach realisieren.

Ferner ist es vorteilhaft, wenn das Zentralventil mittels eines Energiespeichers in die zweite Stellung vorgespannt ist. Bei dieser Ausführungsform wird im Falle eines Fehlers, der bspw. einen Stromausfall beinhaltet, das Zentralventil automatisch in die zweite Stellung versetzt, in der die Kupplungen von den jeweiligen Druckregelventilen getrennt sind.

Bei einer alternativen Ausführungsform ist das Zentralventil mittels eines Energiespeichers in die erste Stellung vorgespannt.

Bei dieser Ausführungsform wird das Zentralventil in der Regel mittels eines Pilotventils in die zweite Stellung versetzt. Dabei kann das Pilotventil so ausgebildet sein, dass dieses bei einem Stromausfall in eine solche Stellung versetzt wird, bei der bspw. der Leitungsdruck gegen die Vorspannung des Zentralventils angelegt wird, um das Zentralventil so sicher in die zweite Stellung zu verbringen, wenn der Fehler auftritt.

Insgesamt ist es besonders bevorzugt, wenn das Zentralventil in der zweiten Stellung ferner einen Druckhaltebetriebspfad zwischen einer Leitungsdruckseite und einer Druckhalteeinrichtung bereitstellt, die dazu ausgelegt ist, in einem Notbetrieb den Druck von einer der Kupplungen zu halten.

Wie bereits oben erwähnt, ist es besonders vorteilhaft, wenn die zwei Kupplungen zwar von ihren Druckregelventilen in dem Notlaufbetrieb getrennt werden, jedoch über eine Druckhalteeinrichtung der Druck von einer der beiden Kupplungen gehalten wird, und zwar über den Druckhaltebetriebspfad. Vorzugsweise ist die Kupplung, die im Notlauf geschlossen wird, die bei Eintreten des Notlaufbetriebes "aktivere" Kupplung. Dies kann sich aus diversen Parametern ableiten, beispielsweise der aktuellen Schaltstellung, etc.

Von besonderem Vorzug ist es jedoch, wenn die Druckhalteeinrichtung eine Druck-Vergleichseinrichtung aufweist, die den ersten Kupplungsdruck und den zweiten Kupplungsdruck miteinander vergleicht und die diejenige Kupplung mit dem höheren Kupplungsdruck (Notlaufkupplung) mit dem Druckhaltebetriebspfad verbindet.

Bei dieser bevorzugten Ausführungsform wird für den Notlauf diejenige Kupplung ausgewählt, die zum Zeitpunkt des Auftretens des Fehlers den höheren Kupplungsdruck aufweist. In diesem Fall geht man davon aus, dass diese Kupplung die "aktivere" Kupplung ist. Ferner wird davon ausgegangen, dass bei der aktiven Kupplung ein Gang eingelegt ist, der zur Aufrechterhaltung der Zugkraft dann eingelegt bleibt.

Von besonderem Vorteil ist es daher, wenn die Druck-Vergleichseinrichtung ein Vergleichsventil aufweist, das durch einander gegenüberliegende Steuerflächen hydraulisch betätigbar ist, die mit dem ersten bzw. dem zweiten Kupplungsdruck verbunden sind.

Das Vergleichsventil bildet demzufolge eine Art "Druckwaage" und wird während des Betriebs des Doppelkupplungsgetriebes ständig umgeschaltet, je nach dem, welche Kupplung gerade den höheren Kupplungsdruck hat.

Gemäß einer alternativen Ausführungsform weist die Druckhalteeinrichtung eine Schaltzustand-Vergleichseinrichtung auf, die die Schaltzustände eines ersten und eines zweiten Getriebezweiges des Doppelkupplungsgetriebes miteinander vergleicht und die diejenige Kupplung mit dem Druckhaltebetriebspfad verbindet (Notlaufkupplung), deren zugeordneter Getriebezweig einen bestimmten Schaltzustand aufweist.

Als Notlaufkupplung ist demzufolge nicht diejenige Kupplung ausgewählt, die den höheren Kupplungsdruck hat. Vielmehr wird diejenige Kupplung als Notlaufkupplung ausgewählt, deren zugeordneter Getriebezweig sich auf Grund des Schaltzustandes für den Notlauf besser eignet.

Im einfachsten Fall wird diejenige Kupplung gewählt, deren Getriebezweig eine eingelegte Vorwärtsgangstufe besitzt. Ferner kann bei dieser Ausführungsform ggf. ein Wiederanfahren im Notlauf ermöglicht werden.

Für den Fall, dass in beiden Getriebezweigen eine Gangstufe eingelegt ist, kann bspw. über unterschiedlich große Steuerflächen an der Vergleichseinrichtung immer eine der beiden Kupplungen gewählt werden (bspw. jene, deren Getriebezweig nicht den Rückwärtsgang beinhaltet, um so die Sicherheit zu erhöhen).

Gemäß einer weiteren alternativen Ausführungsform wählt die Druckhalteeinrichtung in dem Notlauf immer eine bestimmte der zwei Kupplungen als Notlaufkupplung aus.

Bei dieser Ausführungsform wird bspw. immer jene Kupplung, deren Getriebezweig nicht den Rückwärtsgang beinhaltet, als Notlaufkupplung ausgewählt. Der Vorteil dieser Ausführungsform ist ein besonders einfacher Aufbau des Hydraulikkreises insgesamt.

Die nicht als Notlaufkupplung ausgewählte Kupplung wird in allen Ausführungsformen von zugeordneten Druckregelventilen getrennt.

Dabei ist es besonders bevorzugt, wenn die Druckhalteeinrichtung die jeweils nicht als Notlaufkupplung ausgewählte Kupplung drucklos schaltet, also bspw. mit dem Tank verbindet.

Alternativ ist es also auch möglich, die in der nicht als Notlaufkupplung ausgewählten Kupplung über eine vorhandene Grundleckage den Kupplungsdruck auf Null zu reduzieren.

Erfindungsgemäß weist ein Hydraulikkreisabschnitt zwischen dem Zentralventil und den Kupplungen wenigstens ein Druckbegrenzungsventil zur Begrenzung des Kupplungsdruckes auf.

Auf diese Weise kann sicher vermieden werden, dass die häufig nicht unempfindlichen Kupplungen vor einem zu großen Druck geschützt werden.

Von besonderem Vorzug ist es, wenn die Druckhalteeinrichtung das Druckbegrenzungsventil aufweist.

Bei dieser Ausführungsform ist es auf konstruktiv einfache Weise möglich, mittels eines einzigen Druckbegrenzungsventils den Druck beider Kupplungen zu begrenzen.

So ist es besonders vorteilhaft, wenn das Druckbegrenzungsventil zwischen dem Zentralventil und der Vergleichseinrichtung angeordnet ist und in der ersten Stellung des Zentralventils über die Vergleichseinrichtung jeweils den höheren Kupplungsdruck begrenzt.

Somit dient das Druckbegrenzungsventil jeweils zur Druckbegrenzung der aktiveren Kupplung. Da die weniger aktive Kupplung in jedem Fall einen geringeren Druck aufweist (festgestellt durch die Vergleichseinrichtung), ist dort eine Druckbegrenzung nicht erforderlich.

Gemäß einer weiteren bevorzugten Ausführungsform ist der Druckhaltebetriebspfad in der Druckhalteeinrichtung parallel über eine Notdrossel (bspw. Notblende) mit einem Hydraulikkreisabschnitt niedrigeren Druckes verbunden.

Die Notdrossel kann mehrere Funktionen besitzen. Zum einen kann hierüber ein Teil des Volumenstroms von einer Pumpe für den Leitungsdruck zu einem Hydraulikkreisabschnitt geleitet werden, der diesen Volumenstrom benötigt. Zum zweiten ist es möglich in einem Notbetrieb ein Wiederanfahren zu realisieren. Denn an der Notdrossel entwickelt sich ein drehzahlproportionaler Staudruck. Durch Gasgeben kann demzufolge der Druck der aktivierten Notlaufkupplung allmählich erhöht werden, bis die Kupplung wieder greift und so ein Anfahren realisiert wird.

Von besonderem Vorteil ist es, wenn der Hydraulikkreisabschnitt niedrigeren Druckes ein Kupplungskühlabschnitt ist.

Hierbei wird folglich im Notlauf über die Notdrossel den Kupplungen Hydraulikfluid zum Zwecke der Kühlung zugeleitet.

Gemäß einer Ausführungsform ist die parallele Verbindung mit der Notdrossel innerhalb des Zentralventils eingerichtet. Dies kann durch eine geeignet vorgesehene Steuerblende realisiert sein. Bei dieser Ausführungsform wird die Leitung zu der Notdrossel über das Zentralventil dann mit dem Druckhaltebetriebspfad verbunden, wenn der Notlauf stattfindet.

Bei einer alternativen Ausführungsform ist die Notdrossel in einem Zweig angeordnet, der durch ein Notdrosselfreigabeventil freigebbar ist, das parallel zu dem Zentralventil angesteuert ist.

Dabei ist ein separates Ventil (Notdrosselfreigabeventil bzw. Kühlkreisventil) vorgesehen, um die Notdrossel im Notlauf zu aktivieren. Es ist von besonderem Vorzug, wenn die Notdrossel in dem Notdrosselfreigabeventil selbst ausgebildet ist.

Insgesamt ist es ferner vorteilhaft, wenn zwischen der Leitungsdruckseite und dem Zentralventil ein Freigabeschaltventil angeordnet ist, das die Druckhaltefunktion freigibt, wenn die Sicherheit es erlaubt.

Bei dieser Ausführungsform wird das Zentralventil im Notlauf so geschaltet, dass es die Kupplungen von den jeweiligen Druckregelventilen trennt. Wenn die Sicherheit es erlaubt, wird über das Freigabeschaltventil ferner die Druckhaltefunktion freigegeben, so dass der Leitungsdruck über das Zentralventil der Druckhalteeinrichtung zugeführt wird, um den Druck in einer der zwei Kupplungen zu halten.

Dabei ist es von besonderem Vorteil, wenn das Freigabeschaltventil die Druckhaltefunktion freigibt, wenn der höhere Kupplungsdruck größer ist als ein erster Schwellenwert.

Bei dieser Ausführungsform wird angenommen, dass nur dann, wenn der höhere Kupplungsdruck einen bestimmten Schwellenwert übersteigt, diese Kupplung tatsächlich aktiv ist. Falls der höhere Kupplungsdruck unterhalb des Schwellenwertes liegt, wird davon ausgegangen, dass auch diese Kupplung nicht aktiv ist, also über diese Kupplung keine Kraft auf den Abtrieb übertragen wird. Für diesen Fall wird bei dieser Ausführungsform die Druckhaltefunktion nicht freigegeben.

Dabei kann das Freigabeventil vorzugsweise ein Wegeventil sein, dessen Schieber in eine Position vorgespannt ist, in der die Druckhaltefunktion nicht freigegeben ist, wobei eine entgegengesetzte Steuerfläche des Freigabeschaltventils mit einer Leitung der Druckhalteeinrichtung verbunden ist, in der der höhere Kupplungsdruck vorherrscht.

Bei dieser Ausführungsform wird der erste Schwellenwert durch die Vorspannung des Schiebers (bspw. mittels einer Feder) eingestellt.

Das Freigabeschaltventil kann jedoch - zusätzlich oder alternativ - auch handbetätigbar sein.

Bspw. kann es möglich sein, dieses Freigabeschaltventil im Rahmen einer Wartung des Doppelkupplungsgetriebes von Hand zu betätigen, um bestimmte Funktionseinstellungen zu realisieren.

Bei einer besonders bevorzugten Ausführungsform ist das Freigabeschaltventil mechanisch mit einem Wählhebel des Doppelkupplungsgetriebes gekoppelt, so dass die Freigabe der Druckhaltefunktion in Abhängigkeit von der Stellung des Wählhebels erfolgt.

Dabei wird in der Regel davon ausgegangen, dass die Druckhaltefunktion freigegeben wird, wenn der Wählhebel in einer Stellung ist, in der eine Gangstufe eingelegt ist, also bspw. die Stellung "D", wie sie bei Automatikgetrieben üblich ist.

Hingegen könnte in diesem Fall die Druckhaltefunktion gesperrt werden, sobald der Wählhebel in eine Stellung "N" oder in eine Parkstellung "P" verschoben wird.

Für den Fall, dass ein Wiederanfahren möglich gemacht werden soll (mittels der oben erwähnten Notblende), kann der Fahrer dann bei Stillstand des Fahrzeugs und laufendem Motor den Wählhebel von N bzw. nach D versetzen, um die Druckhaltefunktion freizugeben. Dann könnte durch Gas geben der Staudruck an der Notblende erhöht werden, um so die zuletzt aktive Kupplung allmählich zu schließen und in dem eingelegten Gang anzufahren.

Gemäß einer weiteren bevorzugten Ausführungsform ist zwischen dem Freigabeschaltventil und dem Zentralventil ein Parksperrenzylinder angeschlossen.

Bei dieser Ausführungsform lässt sich eine Parksperre auf einfache Weise realisieren.

Die Parksperre würde in diesem Fall vorzugsweise einen Energiespeicher wie eine Feder aufweisen, der die Parksperre in die Parkposition vorspannt (also bspw. eine Sperre in Gang setzt, die die Ausgangswelle des Doppelkupplungsgetriebes blockiert).

In freigegebenem Zustand des Freigabeschaltventils würde der Leitungsdruck gegen diesen Energiespeicher wirken, um die Parksperre zu lösen. Sobald das Freigabeschaltventil die Freigabe wieder hemmt, würde demzufolge der Energiespeicher der Parksperre den Blockierzustand wieder herbeirufen. Diese Ausführungsform ist insbesondere dann von Interesse, wenn sie mit der Ausführungsform kombiniert wird, bei der das Freigabeschaltventil mittels des Wählhebels betätigt wird.

Durch den erfindungsgemäßen Hydraulikkreis wird wenigstens einer der nachfolgenden Vorteile realisiert:
- Reduzierung der Ventilanzahl;
- Nutzung der Druckvergleichseinrichtung für eine Halte- und/oder eine Druckbegrenzungsfunktion;
- Anfahren mittels "Gaspedal" möglich (drehzahlproportionaler Stauraum an Notlaufblende);
- vereinfachte Leitungsführung (Kanalführung) und Bauraumersparnis;
- Öl wird bei der Notlaufsituation direkt zur Kupplungskühlung genutzt;
- bei geeigneter Schaltung kann eine Redundanz für das Kupplungskühlölmanagement realisiert sein;
- der maximale Systemdruck kann größer sein als der maximale Kupplungsdruck, so dass kleinere Aktuatoren und eine höhere Schaltdynamik erzielbar sind. Die Kupplungen werden dabei durch die Druckbegrenzungsfunktion geschützt.

Folgende Merkmale lassen sich bei allen oder einigen Ausführungsformen der Erfindung realisieren:
- ein Wiederanfahren im Notlauf ist möglich, kann jedoch auch bewusst verhindert werden,
- die Druckvergleichseinrichtung kann die "unterlegene" Kupplung im Notlauf auf Tankdruck legen,
- die Aktivierung der "Möglichkeit der Notlauffunktion" kann bewusst mit dem Wählhebel bei Übergang von P nach D erfolgen, so dass der Fahrer auch durch die Schaltung des Wählhebels auf N oder P den Notlaufbetrieb bewusst unterbinden kann. Hierzu wird dieses Schaltventil nicht vom Steuergerät angesteuert, sondern direkt vom Bordnetz bedient. Somit ist eine Art "Not-AUS-Funktion" möglich, und
- über diese Anordnung lässt sich auch ein Parksperrenmechanismus hydraulisch auslegen und mechanisch einlegen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Darstellung eines Schaltbildes einer ersten Ausführungsform des erfindungsgemäßen Hydraulikkreises;
- Fig. 1A: eine schematische Darstellung eines Doppelkupplungsgetriebes mit dem erfindungsgemäßen Hydraulikkreis;
- Fig. 2: eine alternative Ausführungsform des erfindungsgemäßen Hydraulikkreises;
- Fig. 3: einen Teil einer weiteren alternativen Ausführungsform des erfindungsgemäßen Hydraulikkreises;
- Fig. 4: einen Teil einer weiteren alternativen Ausführungsform des erfindungsgemäßen Hydraulikkreises;
- Fig. 5: einen Teil einer weiteren Ausführungsform des erfindungsgemäßen Hydraulikkreises;
- Fig. 6: einen Teil einer weiteren Ausführungsform des erfindungsgemäßen Hydraulikkreises; und
- Fig. 7: eine weitere Ausführungsform eines erfindungsgemäßen Hydraulikkreises.

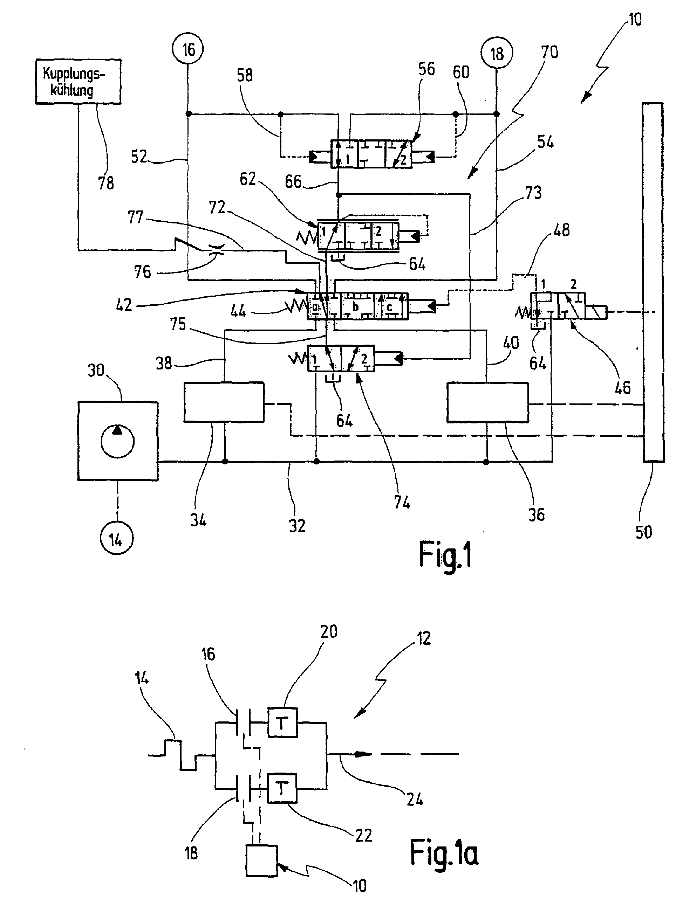

In Fig. 1, 1A ist ein Hydraulikkreis für ein Doppelkupplungsgetriebe gemäß einer ersten Ausführungsform der Erfindung generell mit 10 bezeichnet.

Wie es in Fig. 1A gezeigt ist, weist ein Doppelkupplungsgetriebe 12 an sich bekannter Bauart zwei parallele Trennkupplungen 16, 18 auf, die mit dem Ausgang eines Verbrennungsmotors 14 verbunden sind. Jeder der zwei Kupplungen 16, 18 ist ein eigener Getriebezweig 20 bzw. 22 zugeordnet. Die Ausgänge der zwei Getriebezweige 20, 22 sind auf eine gemeinsame Ausgangswelle 24 gelegt.

Der erste Getriebezweig beinhaltet bspw. die Gangstufen 1, 3, 5, ..., der zweite Getriebezweig 22 beinhaltet bspw. die Getriebestufen 2, 4, 6, R, ... Die Funktion eines derartigen Doppelkupplungsgetriebes 12 ist allgemein bekannt und wird daher aus Gründen einer kompakten Darstellung hier nicht erläutert.

Unter erneuter Bezugnahme auf Fig. 1 weist der Hydraulikkreis 10 eine Pumpe 30 auf, die einen Leitungsdruck 32 erzeugt. Die Pumpe 30 wird in der Regel über eine Kette, einen Zahnriemen oder Ähnliches von dem Verbrennungsmotor 14 angetrieben. Es versteht sich, dass der Leitungsdruck 32 in der Regel auf einen bestimmten Maximaldruck geregelt ist. Die entsprechenden Funktionen des Hydraulikkreises sind aus Gründen einer übersichtlichen Darstellung vorliegend jedoch nicht enthalten.

Der Hydraulikkreis 10 weist ein erstes Druckregelventil 34 für die erste Kupplung 16 sowie ein zweites Druckregelventil 36 für die zweite Kupplung 18 auf. Die Druckregelventile 34, 36 werden aus dem Leitungsdruck 32 gespeist. Das erste Druckregelventil 34 ist über eine erste Kupplungsleitung 38 mit der ersten Kupplung 16 verbindbar. Das zweite Druckregelventil 36 ist über eine zweite Kupplungsleitung 40 mit der zweiten Kupplung 18 verbindbar.

Der Hydraulikkreis 10 weist ferner ein Zentralventil 42 in Form eines Wegeventiles auf. Das Zentralventil 42 weist eine erste Stellung "c" und eine zweite Stellung "a" auf (zwischen denen eine sperrende Mittelstellung "b" vorgesehen sein kann).

Das Zentralventil 42 ist mittels einer Feder 44 in die zweite Stellung "a" vorgespannt.

Das Zentralventil 42 wird im Betrieb mittels eines Pilotventils 46 betätigt. Das Pilotventil 46 erzeugt in einer Steuerleitung 48 einen Steuerdruck, der der Feder 44 entgegenwirkt. Im normalen Betrieb des Hydraulikkreises 10 liegt dieser Steuerdruck an der Steuerleitung 48 an, so dass das Zentralventil 42 im normalen Betrieb sich in der ersten Stellung "c" befindet.

Zu diesem Zweck ist das Pilotventil 46 als Wegeventil mit zwei Stellungen ausgebildet. Im Normalbetrieb wird das Pilotventil 46 elektromagnetisch mittels eines Steuergerätes 50 betätigt, so dass die Stellung "2" eingerichtet wird, in der die Steuerleitung 48 mit dem Leitungsdruck 32 verbunden wird. Dieser ist hinreichend hoch, um das Zentralventil 42 gegen die Feder 44 in die erste Stellung "c" zu versetzen.

In der ersten Stellung "c" ist die erste Kupplungsleitung 38 mit der ersten Kupplung 16 verbunden, so dass in der Kupplung 16 der von dem Druckregelventil 34 erzeugte erste Kupplungsdruck 52 anliegt. In entsprechender Weise ist in der ersten Stellung "c" die zweite Kupplungsleitung 40 mit der zweiten Kupplung 18 verbunden. In der zweiten Kupplung 18 liegt demzufolge der zweite Kupplungsdruck 54 an, der von dem zweiten Druckregelventil 36 erzeugt wird.

Die Druckregelventile werden, wie es schematisch angedeutet ist, ebenfalls von dem Steuergerät 50 gesteuert, und zwar so, dass der Betrieb eines Doppelkupplungsgetriebes realisiert werden kann.

Die Druckregelventile 34, 36 sind vorzugsweise als direktgesteuerte Proportionalwegeventile ausgebildet (direktgesteuerte proportionale Druckregelventile sind auch möglich) wobei der Druck mittels einer Regelstrecke und Drucksensoren digital geregelt wird, obgleich dies in Fig. 1 nicht näher dargestellt ist.

Der Hydraulikkreis 10 weist ferner ein Vergleichsventil 56 auf, das nach der Art einer Druckwaage ausgebildet ist. Das Vergleichsventil 56 ist als Wegeventil realisiert, mit zwei hydraulisch betätigbaren, gegenüberliegenden Steuerflächen. Die erste Steuerfläche ist über eine erste Steuerleitung 58 mit dem ersten Kupplungsdruck 52 verbunden. Die gegenüberliegende Steuerfläche ist über eine zweite Steuerleitung 60 mit dem zweiten Kupplungsdruck 54 verbunden.

Das Vergleichsventil 56 weist eine erste Position "1" und eine zweite Position "2" auf. Die erste Position "1" wird eingerichtet, wenn der erste Kupplungsdruck 52 größer ist als der zweite Kupplungsdruck 54. Umgekehrt wird die zweite Stellung des Vergleichsventils 56 eingerichtet, wenn der zweite Kupplungsdruck 54 größer ist als der erste Kupplungsdruck 52.

Der Hydraulikkreis 10 weist ferner ein Druckbegrenzungsventil 62 auf. Das Druckbegrenzungsventil 62 ist als stetig veränderliches Wegeventil ausgebildet.

Sofern der Druck in einer Verbindungsleitung 66 größer ist als der von dem Druckbegrenzungsventil 62 eingestellte Druck, wird die Verbindungsleitung 66 mit einem Tank 64 verbunden. Die Konstruktion des Druckregelventils 62 ist an sich bekannt und wird daher nicht näher erläutert.

Das Vergleichsventil 56 verbindet in der ersten Stellung "1" die Kupplung 16 mit der Verbindungsleitung 66. In der Stellung "2" des Vergleichsventils 56 ist die zweite Kupplung 18 mit der Verbindungsleitung 66 verbunden.

Demzufolge wird mittels des Druckbegrenzungsventils 62 jeweils der höhere Kupplungsdruck 52, 54 druckbegrenzt.

Durch diese Ausgestaltung wird ein zweites Druckbegrenzungsventil eingespart. Denn es ist hinreichend, jeweils den höheren der zwei Kupplungsdrücke 52, 54 zu begrenzen. So lange der andere Kupplungsdruck unter dem Begrenzungsdruck des Druckbegrenzungsventils 62 liegt, was der Regelfall sein wird, ist dies unproblematisch. Sollte der andere Kupplungsdruck über den Begrenzungsdruck hinaus ansteigen, würde der andere Kupplungsdruck automatisch der höhere Kupplungsdruck und würde dann über die Druckwaage 56 mit dem Druckbegrenzungsventil 62 verbunden.

Somit ist ein einzelnes Druckbegrenzungsventil 62 zur Realisierung der Druckbegrenzungsfunktion für beide Kupplungen 16, 18 hinreichend.

Falls das Steuergerät 50 einen Fehler erkennt, der einen Notfallbetrieb notwendig macht, schaltet das Steuergerät 50 die elektromagnetische Betätigung des Pilotventils 46 ab. Dieses wird durch die Federvorspannung in die Position "1" versetzt, die in Fig. 1 dargestellt ist. In dieser wird die Steuerleitung 48 mit dem Tank 64 verbunden. Dies führt dazu, dass das Zentralventil 42 mittels der Feder 44 in die in Fig. 1 dargestellte zweite Stellung "a" versetzt wird. Das Gleiche geschieht, wenn das Steuergerät 50 bspw. auf Grund eines Stromausfalles komplett ausfällt. Auch in diesem Falle wird die elektromagnetische Betätigung des Pilotventils 46 abgeschaltet.

In der zweiten Stellung "a" des Zentralventils 44 sind die zwei Kupplungen 16, 18 von ihren zugeordneten Druckregelventilen 34, 36 getrennt. Dies erfolgt mittels des Zentralventils 42 quasi gleichzeitig, so dass die Sicherheit insgesamt erhöht wird.

In der vorliegenden Ausführungsform des Hydraulikkreises 10 wird jedoch zusätzlich unter bestimmten Voraussetzungen mittels einer generell mit 70 bezeichneten Druckhalteeinrichtung eine Druckhaltefunktion realisiert. Durch die Druckhaltefunktion wird bei Auftreten eines Teilproblems im Bereich der Kupplungsregelung (Sensoren, Ventile, etc.) bzw. bei Ausfall des Steuergerätes 50 der Kupplungsdruck in der zuletzt aktiven Kupplung der zwei Kupplungen 16, 18 aufrechterhalten. Obgleich die normale Druckregelung über die Druckregelventile 34, 36 im Notlauf somit außer Kraft gesetzt ist, kann mittels eines derart definierten Notlaufbetriebes der Antriebsstrang geschlossen gehalten werden. Demzufolge kann vermieden werden, dass bspw. während eines Überholvorganges die Zugkraft einbricht.

In der Stellung "a" des Zentralventils 42 wird ein Druckhaltebetriebspfad 72 mit einer Freigabeleitung 75 verbunden. Ein Freigabeschaltventil 74, das als Wegeventil ausgebildet ist, ist zwischen der Freigabeleitung 75 und dem Leitungsdrucknetz 32 vorgesehen. Das Freigabeschaltventil 74 ist in eine Position "1" vorgespannt, in der die Freigabeleitung 75 mit dem Tank 64 verbunden ist. Die gegenüberliegende Steuerfläche des Freigabeschaltventils 74 ist mit einer Steuerleitung 73 verbunden, die an die Verbindungsleitung 66 angeschlossen ist. Demzufolge wird die Steuerfläche des Freigabeschaltventils 74 mit dem jeweils höheren Kupplungsdruck 52, 54 beaufschlagt.

Sofern der höhere Kupplungsdruck 52, 54 größer ist als ein durch die Vorspannung des Freigabeschaltventils 74 vorgegebener Schwellenwert, wird das Freigabeschaltventil 74 in die Stellung "2" versetzt. In der Stellung "2" ist die Druckhaltefunktion freigegeben und die Freigabeleitung 75 ist mit der Leitungsdruckseite 32 verbunden. Über das Zentralventil 42 in der Stellung "a", den Druckhaltebetriebspfad 72, das Druckbegrenzungsventil 62, die Verbindungsleitung 66 und das Vergleichsventil 56 wird demzufolge der Leitungsdruck 32 an diejenige Kupplung der zwei Kupplungen 16, 18 geführt, die zum Zeitpunkt der Umschaltung des Zentralventils 42 den höheren Kupplungsdruck 52, 54 hatte.

Da der Leitungsdruck 32 über das Druckbegrenzungsventil 62 an die im Notlauf derart aktivierte Kupplung (Notlaufkupplung) geführt wird, wird der Druck tatsächlich auf den Begrenzungsdruck begrenzt, der von dem Druckbegrenzungsventil 62 eingerichtet ist. Daher wird vermieden, dass die Kupplungen 16, 18 im Notlauf (Notlauf) mit dem möglicherweise zu hohen Leitungsdruck 32 beaufschlagt werden.

Der Begrenzungsdruck des Druckbegrenzungsventils 62 entspricht im Wesentlichen dem maximal zulässigen Druck, mit dem die Kupplungen 16, 18 jeweils belastet werden können. Da der Leitungsdruck 32 in der Regel höher ist, wird die Notlaufkupplung demzufolge in der Regel vollständig geschlossen.

Die nicht aktivierte Kupplung (die "unterlegene" Kupplung) bleibt auf dem für sie bei Auftreten des Notlaufes bestehenden Druck, da die mit dieser Kupplung verbundenen Leitungen durch das Zentralventil 42 bzw. das Vergleichsventil 56 abgesperrt werden.

Sofern der auf der Verbindungsleitung 66 vorliegende höhere Kupplungsdruck 52, 54 kleiner ist als der durch die Vorspannung des Freigabeschaltventils 74 vorgegebene Schwellenwert wird der Druckhaltebetriebspfad 72 über das Zentralventil 42 und das Freigabeschaltventil 74 mit dem Tank 64 verbunden. Die Druckhaltefunktion wird folglich nicht realisiert.

Falls bspw. zum Zeitpunkt des Auftretens des Notlaufes beide Kupplungen 16, 18 inaktiv sind und folglich geöffnet sind, wird demzufolge keine Leistung über den Antriebsstrang übertragen. Das Fahrzeug steht entweder oder rollt. In diesem Fall würde es keinen Sinn machen, eine der zwei Kupplungen 16, 18 durch die Druckhaltefunktion zu aktivieren, da zumindest im Falle des Rollens ein unvorhergesehener Zustand eintreten könnte (falls in dem dieser Kupplung zugeordneten Getriebezweig eine Gangstufe eingelegt ist, um ein Beispiel zu nennen).

Wie es in Fig. 1 zu erkennen ist, weist das Zentralventil 42 in der Stellung "a" eine Verbindung zwischen der Freigabeleitung 75 und dem Druckhaltebetriebspfad 72 sowie parallel hierzu eine Verbindung zwischen der Freigabeleitung 75 und Kühlkreisleitung 77 auf. Dieser parallele Anschluss ist über die Kühlkreisleitung 77 mit einer Notdrossel (Notlaufblende) 76 verbunden, die wiederum mit einer Kupplungskühlung 78 verbunden ist.

Die Notlaufblende 76 kann auch wahlweise in temperaturkompensierter Ausführung integriert werden (z.B. mit Bimetallblende).

Über diesen parallelen Zweig wird demzufolge im Notlaufbetrieb und freigegebener Druckhaltefunktion ein von der Pumpe 30 erzeugter Volumenstrom über die Blende 76 zur Kühlung der Kupplungen 16, 18 verwendet. Demzufolge könnte während des Notlaufes sogar der reguläre Kühlkreislauf ausgefallen sein. In dem Druckhaltebetrieb wird die Kupplungskühlung über die Druckhalteeinrichtung 70 realisiert.

Durch das Bereitstellen der Notlaufblende 76 wird dabei gewährleistet, dass der über die Pumpe 30 erzeugte Volumenstrom in der Regel einen hinreichend hohen Staudruck in dem Druckhaltebetriebspfad 72 erzeugt, um die Notlaufkupplung aktiviert zu halten, bzw. den Kupplungsdruck darin zu halten.

Sofern die Notlaufblende 76 geeignet dimensioniert ist, kann ferner folgende Zusatzfunktion realisiert sein.

Wenn die Notlaufblende 76 so dimensioniert ist, dass der mittels der Pumpe 30 erzeugte Staudruck in dem Druckhaltebetriebspfad 72 bei Erreichen der Leerlaufdrehzahl des Verbrennungsmotors 14 so weit absinkt, dass der durch das Freigabeschaltventil 74 eingerichtete Schwellenwert unterschritten wird, wird die Druckhaltefunktion durch die Vorspannung des Freigabeschaltventils 74 aufgehoben. Hierdurch wird die Notlaufkupplung über die Ventilanordnungen mit dem Tank 64 verbunden und demzufolge geöffnet.

Somit kann bei geeigneter Dimensionierung der Notlaufblende 76 erreicht werden, dass die Notlaufkupplung geöffnet wird, sobald die Drehzahl des Verbrennungsmotors 14 in den Bereich der Leerlaufdrehzahl abgefallen ist.

Durch diese Maßnahme kann verhindert werden, dass der Motor während des Notlaufes beim Langsamerwerden abgewürgt wird. Dies führt zu einer deutlichen Komfortverbesserung, da in dem Notlauf bei einem schließlich realisierten Halt des Fahrzeugs der Verbrennungsmotor 14 weiterlaufen kann. Hierdurch können Komfortaggregate wie bspw. eine Klimaanlage, Heizung oder Ähnliches trotz des Notlaufes des Hydraulikkreises 10 weiterbetrieben werden.

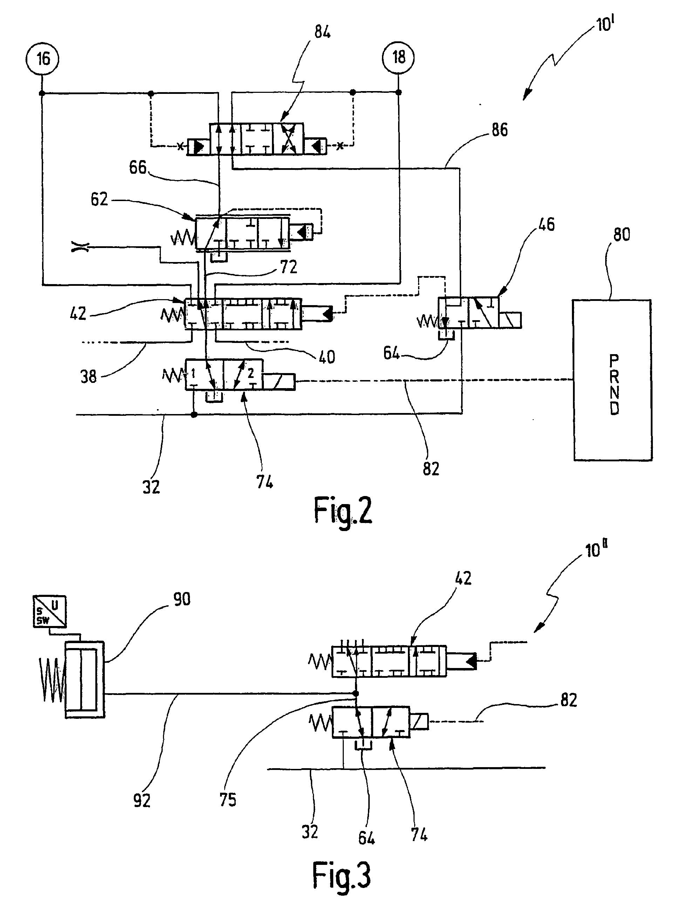

In Fig. 2 ist eine alternative Ausführungsform des erfindungsgemäßen Hydraulikkreises generell mit 10' bezeichnet. Der Hydraulikkreis 10' entspricht in seinem Aufbau und seiner Funktion dem Hydraulikkreis 10 der Fig. 1. Auf dessen Beschreibung wird demzufolge Bezug genommen. Im Folgenden werden lediglich die Unterschiede erläutert.

Bei dem Hydraulikkreis 10' ist das Freigabeschaltventil 74 über eine Steuerleitung 82 oder mechanisch von einem Wählhebel 80 betätigbar. Bei dem Wählhebel 80 handelt es sich um einen Hebel, mit dem wenigstens zwischen einem Fahrbetrieb "D" und einem Parkzustand "P" unterschieden werden kann. In der Stellung Fahrbetrieb "D" (und ggf. in "R") ist der Wählhebel 80 in einer solchen Position, dass er das Freigabeschaltventil 74 gegen die Federvorspannung in die Position "2" versetzt. In der Stellung "P" hingegen (und ggf. in der Stellung "N") wird das Freigabeschaltventil 74 in die Stellung "1" versetzt, so dass die Druckhaltefunktion deaktiviert ist.

Bei dem Hydraulikkreis 10' wird die Druckhaltefunktion somit von dem Fahrer des Fahrzeugs aktiviert bzw. deaktiviert. Falls ein Notlauf während des Fahrbetriebs auftritt, befindet sich der Wählhebel 80 in der Stellung "D". Demzufolge ist die Druckhaltefunktion aktiviert und erzeugt die oben beschriebenen Wirkungen.

Sofern der Fahrer sich dem Stillstand nähert, kann er die Notlaufkupplung öffnen, indem er von "D" in "N" oder "P" schaltet. Hierdurch wird die Druckhaltefunktion deaktiviert. Ferner kann hierdurch noch sicherer vermieden werden, dass der Verbrennungsmotor 14 abgewürgt wird.

Sofern der Fahrer während dieses Notfallzustandes wieder anfahren möchte, kann er mittels des Wählhebels 80 die Druckhaltefunktion wieder aktivieren. Durch Betätigen des Gaspedals kann die Drehzahl des Verbrennungsmotors 14 angehoben werden und folglich der von der Pumpe 30 bereitgestellte Volumenstrom erhöht werden. Demzufolge erhöht sich in dem Druckhaltebetriebspfad 72 der Staudruck, und zwar so, dass mittels dieses Staudruckes diejenige Kupplung mit diesem Staudruck beaufschlagt wird, die von einem Vergleichsventil 84 (das das Vergleichsventil 56 der Fig. 1 ersetzt) ausgewählt ist.

Somit lässt sich bei dieser Ausführungsform sogar ein Wiederanfahren im Notlaufbetrieb realisieren.

Das Vergleichsventil 84 ist wie das Vergleichsventil 56 der Fig. 1 als Waage ausgebildet. In den beiden Endstellungen ist jeweils jedoch ein zusätzlicher Pfad eingerichtet, so dass die jeweils "unterlegene" Kupplung über eine Rückleitung 86, die mit dem Pilotventil 46 verbunden ist, mit dem Tank 64 verbunden wird. Demzufolge wird bei dieser Ausführungsform die jeweils unterlegene und nicht als Notlaufkupplung ausgewählte Kupplung drucklos geschaltet.

Das Vergleichsventil 84 und die Rückleitung 86 können auch ohne sonstige Änderungen an Stelle des Vergleichsventils 56 bei dem Hydraulikkreis 10 der Fig. 1 eingesetzt werden.

In Fig. 3 ist ein Teil einer weiteren Ausführungsform des erfindungsgemäßen Hydraulikkreises generell mit 10" bezeichnet.

Der Hydraulikkreis 10'' entspricht in seinem Aufbau und seiner Funktion dem Hydraulikkreis 10' Figur 2. Im Folgenden werden lediglich die Unterschiede erläutert.

Bei dem Hydraulikkreis 10'' ist an der Freigabeleitung 75 über eine Verbindungsleitung 92 ein Parksperrenzylinder 90 angeschlossen.

Der Parksperrenzylinder 90 ist Teil einer Parksperre des Doppelkupplungsgetriebes 12 und ist in eine Richtung, in der die Parksperre eingeschaltet ist, mittels einer nicht näher bezeichneten Feder vorgespannt.

Sofern mittels des Wählhebels 80 die Parkposition "P" ausgewählt ist, ist das Freigabeschaltventil 74 deaktiviert. Die Freigabeleitung 75 ist mit dem Tank 64 verbunden. Demzufolge wird mittels der Feder des Parksperrenzylinders 90 die Parksperre eingelegt. Sofern mittels des Wählhebels 80 in die Stellung "D" geschaltet wird, wird die Freigabeleitung 75 mit dem Leitungsdruck 32 versorgt, so dass der Parksperrenzylinder 90 gegen die Kraft der Feder ausgelenkt wird. Demzufolge wird die Parksperre ausgeschaltet. Auf diese Weise lässt sich mit konstruktiv einfachen Mitteln eine Parksperre realisieren.

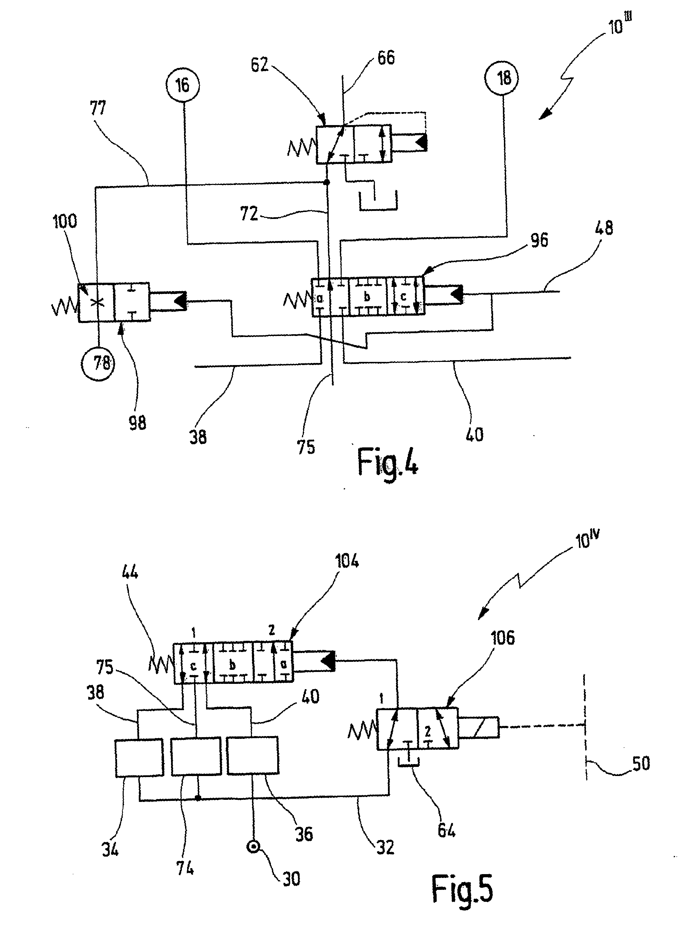

In Fig. 4 ist ein Teil einer weiteren Ausführungsform des erfindungsgemäßen Hydraulikkreises generell mit 10''' bezeichnet. Der Hydraulikkreis 10''' entspricht in seinem generellen Aufbau und seiner generellen Funktion einem der Hydraulikkreise der Figuren 1 bis 3. Im Folgenden werden jeweils lediglich die Unterschiede erläutert.

Der Hydraulikkreis 10''' weist anstelle des Zentralventils 42 ein Zentralventil 96 auf.

Das Zentralventil 96 unterscheidet sich von dem Zentralventil 42 der vorangegangenen Ausführungsformen dadurch, dass in der Stellung "a" kein paralleler Zweig zu einer Notfallblende 76 eingerichtet ist.

Stattdessen ist bei dem Hydraulikkreis 10''' ein Kühlkreisventil 98 vorgesehen. Das Kühlkreisventil 98 wird parallel zu dem Zentralventil 96 angesteuert (mittels Steuerleitung 48).

Im Normalbetrieb (entsprechend Stellung "c" des Zentralventils 96) ist das Kühlkreisventil 98 demzufolge in einer Sperrstellung, in der es die Kühlkreisleitung 77 von der Kupplungskühlung 78 trennt.

Im Notlaufbetrieb (entsprechend Stellung "a" des Zentralventils 96) wird die Kühlkreisleitung 77 über eine in dem Kühlkreisventil 98 integrierte Notlaufblende 100 mit der Kupplungskühlung 78 verbunden.

Die generelle Funktionsweise der Notlaufblende 100 entspricht jener der Notlaufblende 76 des Hydraulikkreises 10 der Fig. 1.

Durch diese Trennung der Funktionen des Zentralventils 42 in die Funktionen des Zentralventils 96 und des Kühlkreisventils 98 können bauliche Vorteile entstehen.

Generell ist es auch möglich, dass das Zentralventil 96 in zwei Einzelschieber aufgespalten wird.

In Fig. 5 ist ein Teil einer weiteren Ausführungsform des erfindungsgemäßen Hydraulikkreises generell mit 10^{IV} bezeichnet. Der Hydraulikkreis 10^{IV} entspricht hinsichtlich Aufbau und Funktion den Hydraulikkreisen, die zuvor erörtert wurden. Im Folgenden wird lediglich auf die Unterschiede eingegangen.

So weist der Hydraulikkreis 10^{IV} ein Zentralventil 104 auf, das im Normalbetrieb mittels einer Feder 44 in die Stellung "c" vorgespannt ist.

Anstelle des Pilotventils 46 der Fig. 1 ist ein Pilotventil 106 vorgesehen. Dieses ist mittels einer Feder in eine Stellung "1" vorgespannt, in der der Leitungsdruck 32 mit der entgegengesetzten Steuerfläche des Zentralventils 104 verbunden ist. Die entgegengesetzte Steuerfläche des Pilotventils 106 ist, bspw. wie in Fig. 1 gezeigt, mit dem Steuergerät 50 verbunden. Im Normalbetrieb wird das Pilotventil 106 demzufolge in eine Stellung "2" versetzt, in der die Steuerfläche des Zentralventils 104 entlastet wird (mit dem Tank 64 verbunden wird).

Demzufolge wird im Normalbetrieb mittels der Feder 44 die Stellung "c" eingerichtet. Sofern das Pilotventil 106 umschaltet (wie das Pilotventil 46 der Fig. 1), wird der Leitungsdruck 32 auf die Steuerfläche des Zentralventils 104 gelegt, so dass dieses in die Stellung "a" versetzt wird, um den Notlaufbetrieb einzurichten.

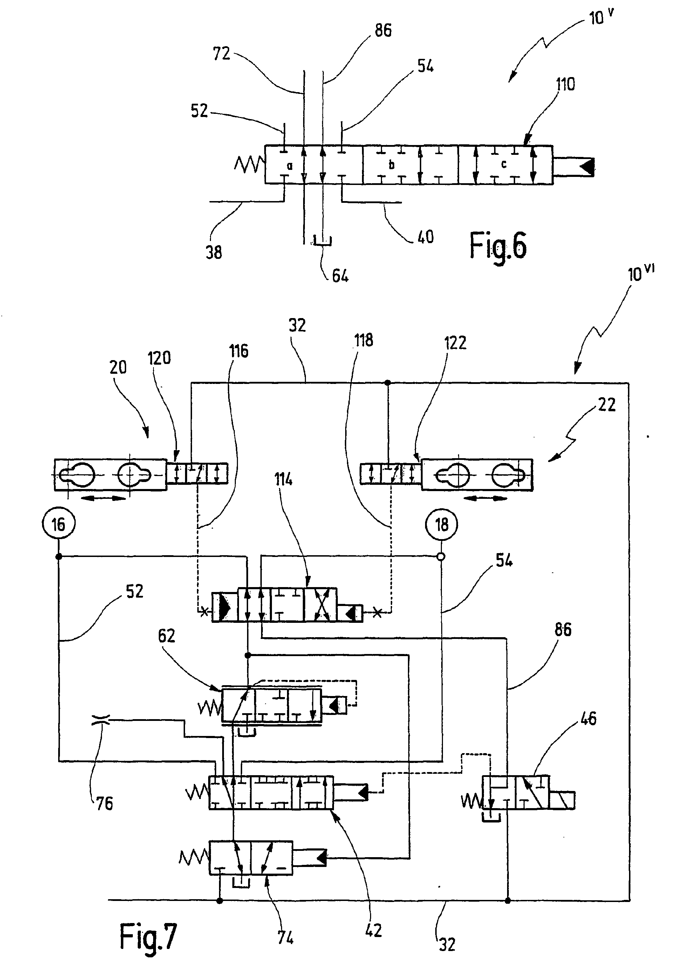

In Fig. 6 ist ein Teil einer weiteren Ausführungsform des erfindungsgemäßen Hydraulikkreises generell mit 10^{v} bezeichnet.

Der Hydraulikkreis 10^{v} entspricht hinsichtlich Aufbau und Funktion den zuvor erörterten Hydraulikkreisen. Im Folgenden wird lediglich auf die Unterschiede eingegangen.

So weist der Hydraulikkreis 10^{v} ein Zentralventil 110 auf, das anstelle des Zentralventils 42 des Hydraulikkreises 10' der Fig. 2 vorgesehen ist.

Wie bei dem Hydraulikkreis 10' ist vorgesehen, die unterlegene Kupplung zum Tank 64 hin zu entlasten, und zwar über eine Leitung 86. Im Gegensatz zu der Ausführungsform der Fig. 2 wird die Leitung 86 jedoch nicht zu dem Pilotventil 46 geführt. Stattdessen weist das Zentralventil 110 einen weiteren Pfad auf, um die Leitung 86 mit dem Tank 64 zu verbinden, wenn der Notlaufbetrieb eingerichtet ist. Hierdurch wird das Pilotventil 46 entlastet. Ferner wird die unterlegene Kupplung beim Hub des Zentralventils 110 mit dem Tank 64 verbunden, bevor die "Sieger"-Kupplung im Notlaufbetrieb mit dem Haltedruck versorgt wird. Demzufolge kann das Vergleichsventil 84 hinsichtlich der Druckwaagenfunktion "stabilisiert" werden.

In Fig. 7 ist eine weitere alternative Ausführungsform des erfindungsgemäßen Hydraulikkreises generell mit 10^{VI} bezeichnet.

Der generelle Aufbau und die generelle Funktion des Hydraulikkreises 10^{VI} entsprechen jenen der zuvor erörterten Hydraulikkreise. Im Folgenden wird lediglich auf die Unterschiede eingegangen.

So weist der Hydraulikkreis 10^{VI} ein Vergleichsventil 114 auf, das das Vergleichsventil 84 des Hydraulikkreises 10' der Fig. 2 ersetzt.

Das Vergleichsventil 114 entspricht hinsichtlich der Arbeitsanschlüsse und -pfade dem Vergleichsventil 84. Die einander gegenüberliegenden Steuerflächen sind jedoch nicht mit den Kupplungsdrücken 52, 54 verbunden.

So ist die dem ersten Kupplungsdruck 52 zugeordnete Steuerfläche des Vergleichsventils 114 über eine Steuerleitung 116 mit dem zugeordneten ersten Getriebezweig 20 verbunden. Entsprechend ist die gegenüberliegende Steuerfläche des Vergleichsventils 114 über eine Steuerleitung 118 mit dem zweiten Getriebezweig 22 verbunden.

In dem ersten Getriebezweig 20 ist an einer Schaltstange dieses Getriebezweiges ein Sperrschieber 120 vorgesehen, dessen Schaltstellungen den Gangstufen des Getriebezweiges 20 entsprechen. In entsprechender Weise ist eine Schaltwelle des zweiten Getriebezweiges 22 mit einem ähnlich aufgebauten Sperrschieber 122 gekoppelt.

Die Sperrschieber sind dazu ausgelegt, in ausgewählten Stellungen den Leitungsdruck 32 mit den Steuerleitungen 116, 118 zu verbinden. Sie können als Schieberventil oder als Sitzventil ausgeführt werden. Die Funktion eines Schiebers kann auch in mehrere Teilfunktionen und entsprechend Teilventile unterteilt werden.

Durch diese Maßnahme ist das Vergleichsventil 114 als Schaltzustand-Vergleichsventil ausgebildet.

Bei dem Hydraulikkreis 10^{VI} kann demzufolge diejenige Kupplung mit der Druckhalteeinrichtung 70 verbunden werden, deren Schaltzustand günstiger ist. In der Regel ist dies die Kupplung, deren Getriebezweig eine eingelegte Gangstufe besitzt.

Für den Fall, dass in beiden Getriebezweigen 20, 22 jeweils eine Gangstufe eingelegt ist, ist vorgesehen, dass dann immer die erste Kupplung 16 als Notlaufkupplung herangezogen wird.

Dies wird dadurch erreicht, dass die Steuerfläche, mit der die Steuerleitung 116 verbunden ist, größer ist als die der Steuerleitung 118 zugeordnete Steuerfläche.

Bei dieser Ausführungsform ist auch eine Wiederanfahrfunktion (mittels des Staudruckes an der Blende 76) sicher zu realisieren, da über die Sperrschieber 120, 122 der Schaltzustand des Getriebes "erkannt" werden kann.

Die Sperrschieber können aus Kunststoff aufgebaut sein, da sie in Bezug auf die Schaltverriegelung keine richtigen Sperraufgaben vollziehen müssen. Die Sperrschieber können auch in einen "Getriebesperrschieber" funktional integriert werden.

Abgesehen von den verschiedenen, oben besprochenen Ausführungsformen von erfindungsgemäßen Hydraulikkreisen können bspw. folgende Modifikationen vorgenommen werden:

Die Vergleichseinrichtung in Form des Vergleichsventils kann bspw. mittenzentriert sein.

Es ist auch möglich, dass die Vergleichseinrichtung einseitig zentriert ist, wobei ein Getriebezweig bevorzugt wird (bspw. niemals der Zweig, der den Rückwärtsgang enthält). Auch ist es möglich, wie bei einigen obigen Ausführungsformen, dass die unterlegene Kupplung mit dem Tank verbunden wird.

Das Vergleichsventil kann ferner rastiert werden, um Regelschwankungen zu vermeiden.

Auch ist es möglich, das Vergleichsventil durch die Lage von eventuellen Sperrschieber-Tastventilen der Gangaktuatoren zu steuern, wie es bei dem Hydraulikkreis 10^{VI} der Fall ist.

Das Zentralventil kann unterschiedlich ausgeführt werden:
- Ohne Integration einer Notlaufblende, wie es bspw. bei dem Hydraulikkreis 10 der Fall ist.
- Mit Integration der Notlaufblende (durch Integration der Ventile 96, 100 in ein Ventil, um ein Beispiel zu nennen).
- Mit Tankentlastung der unterlegenen Kupplung (vgl. Hydraulikkreis 10^{v}).
- Ohne Tankentlastung des Vergleichsventils (vgl. bspw. Hydraulikkreis 10 der Fig. 1).
- Das Zentralventil kann in zwei Teilschieber getrennt werden.
- Das Zentralventil kann vorgesteuert (mittels Pilotventil) oder direkt gesteuert werden.
- Das Zentralventil kann mit einem Sensor überwacht werden, um die Sicherheit zu erhöhen.
- Das Zentralventil kann "normal closed" (wie in Fig. 1), oder "normal open" (wie in Fig. 5) ausgeführt werden.
- Das Pilotventil kann den Druckraum am Schieber zum Tank entlasten (als 3/2-Wegeventil).
- Der Druckraum am Zentralventil kann mit einer Blende zum Tank entlastet sein.
- Das Zentralventil kann als 4/2-Schaltventil ausgeführt sein.

Die Notlauffunktion kann folgendermaßen freigeschaltet werden:
- über ein druckgesteuertes Freigabeschaltventil, so dass unterhalb eines bestimmten Kupplungsdruckes die Funktion beendet wird (vgl. bspw. Fig. 1).
- Durch elektrische Steuerung des Freigabeschaltventils über das Bordnetz bzw. einen Wählhebel (vgl. bspw. Fig. 2).
- Durch mechanische Betätigung des Freigabeschaltventils 74 über den Wählhebel (z.B. mittels eines Seilzuges, ähnlich zu Fig. 2).

## Patentansprüche

1. Hydraulikkreis (10) für ein Doppelkupplungsgetriebe (12) für Kraftfahrzeuge, mit einer ersten und einer zweiten hydraulisch betätigbaren Kupplung (16, 18), einem ersten und einem zweiten Druckregelventil (34, 36) zum Regeln des Kupplungsdruckes (52, 54) der ersten bzw. der zweiten Kupplung (16, 18), und einem einzelnen Zentralventil (42; 96; 104; 110), das in einer ersten Stellung (c) die Druckregelventile (34, 36) mit den jeweiligen Kupplungen (16, 18) verbindet und in einer zweiten Stellung (a) die Druckregelventile (34, 36) von den jeweiligen Kupplungen (16, 18) trennt,
**dadurch gekennzeichnet, dass**
ein Hydraulikkreisabschnitt zwischen dem Zentralventil (42; 96; 104; 110) und den Kupplungen (16, 18) wenigstens ein Druckbegrenzungsventil (62) zur Begrenzung des Kupplungsdruckes (52, 54) aufweist.

2. Hydraulikkreis nach Anspruch 1, **dadurch gekennzeichnet, dass** das Zentralventil (42; 96; 104; 110) ein Wegeventil ist.

3. Hydraulikkreis nach Anspruch 1 oder 2, **dadurch gekennzeichnet, dass** das Zentralventil (42; 96; 110) mittels eines Energiespeichers (44) in die zweite Stellung (a) vorgespannt ist.

4. Hydraulikkreis nach Anspruch 1 oder 2, **dadurch gekennzeichnet, dass** das Zentralventil (104) mittels eines Energiespeichers (44) in die erste Stellung (c) vorgespannt ist.

5. Hydraulikkreis nach einem der Ansprüche 1 bis 4, **dadurch gekennzeichnet, dass** das Zentralventil (42; 96; 104; 110) in der zweiten Stellung (a) ferner einen Druckhaltebetriebspfad (72) zwischen einer Leitungsdruckseite (32) und einer Druckhalteeinrichtung (70) bereitstellt, die dazu ausgelegt ist, in einem Notlauf den Druck (52, 54) von einer der Kupplungen (16, 18) zu halten.

6. Hydraulikkreis nach Anspruch 5, **dadurch gekennzeichnet, dass** die Druckhalteeinrichtung (70) eine Druck-Vergleichseinrichtung (56; 84) aufweist, die den ersten Kupplungsdruck (52) und den zweiten Kupplungsdruck (54) miteinander vergleicht und die diejenige Kupplung (16, 18) mit dem höheren Kupplungsdruck (Notlaufkupplung) mit dem Druckhaltebetriebspfad (72) verbindet.

7. Hydraulikkreis nach Anspruch 6, **dadurch gekennzeichnet, dass** die Druck-Vergleichseinrichtung (56; 84) ein Vergleichsventil (56; 84) aufweist, das durch einander gegenüberliegende Steuerflächen hydraulisch betätigbar ist, die mit dem ersten bzw. dem zweiten Kupplungsdruck (52, 54) verbunden sind.

8. Hydraulikkreis nach Anspruch 5, **dadurch gekennzeichnet, dass** die Druckhalteeinrichtung (70) eine Schaltzustand-Vergleichseinrichtung (114) aufweist, die die Schaltzustände eines ersten und eines zweiten Getriebezweiges (20, 22) des Doppelkupplungsgetriebes (12) miteinander vergleicht und die diejenige Kupplung (16, 18) mit dem Druckhaltebetriebspfad (72) verbindet (Notlaufkupplung), deren zugeordneter Getriebezweig (20, 22) einen bestimmten Schaltzustand aufweist.

9. Hydraulikkreis nach Anspruch 5, **dadurch gekennzeichnet, dass** die Druckhalteeinrichtung in dem Notlauf immer eine bestimmte der zwei Kupplungen als Notlaufkupplung auswählt.

10. Hydraulikkreis nach einem der Ansprüche 6 bis 9, **dadurch gekennzeichnet, dass** die Druckhalteeinrichtung (70) die jeweils nicht als Notlaufkupplung ausgewählte Kupplung (16, 18) drucklos schaltet.

11. Hydraulikkreis nach Anspruch 5, **dadurch gekennzeichnet, dass** die Druckhalteeinrichtung (70) das Druckbegrenzungsventil (62) aufweist.

12. Hydraulikkreis nach Anspruch 11, **dadurch gekennzeichnet, dass** das Druckbegrenzungsventil (62) zwischen dem Zentralventil (42; 96; 104; 110) und der Vergleichseinrichtung (56; 84; 114) angeordnet ist und in der ersten Stellung (c) des Zentralventils (42; 96; 104; 110) über die Vergleichseinrichtung (56; 84; 114) jeweils den höheren Kupplungsdruck (52, 54) begrenzt.

13. Hydraulikkreis nach einem der Ansprüche 5 bis 12, **dadurch gekennzeichnet, dass** der Druckhaltebetriebspfad (72) in der Druckhalteeinrichtung (70) parallel über eine Notlaufdrossel (76; 100) mit einem Hydraulikkreisabschnitt (78) niedrigeren Druckes verbunden ist.

14. Hydraulikkreis nach Anspruch 13, **dadurch gekennzeichnet, dass** der Hydraulikkreisabschnitt (78) niedrigeren Druckes ein Kupplungskühlabschnitt (78) ist.

15. Hydraulikkreis nach Anspruch 13 oder 14, **dadurch gekennzeichnet, dass** die parallele Verbindung mit der Notlaufdrossel (76) innerhalb des Zentralventils (42) eingerichtet ist.

16. Hydraulikkreis nach Anspruch 13 oder 14, **dadurch gekennzeichnet, dass** die Notlaufdrossel (100) in einem Zweig angeordnet ist, der durch ein Notlaufdrosselfreigabeventil (98) freigebbar ist, das parallel zu dem Zentralventil (96) angesteuert ist.

17. Hydraulikkreis nach einem der Ansprüche 5 bis 16, **dadurch gekennzeichnet, dass** zwischen der Leitungsdruckseite (32) und dem Zentralventil (42; 96; 104; 110) ein Freigabeschaltventil (74) angeordnet ist, das die Druckhaltefunktion freigibt, wenn die Sicherheit es erlaubt.

18. Hydraulikkreis nach Anspruch 17, **dadurch gekennzeichnet, dass** das Freigabeschaltventil (74) die Druckhaltefunktion freigibt, wenn der höhere Kupplungsdruck (52, 54) größer ist als ein erster Schwellenwert.

19. Hydraulikkreis nach Anspruch 17 oder 18, **dadurch gekennzeichnet, dass** das Freigabeschaltventil (74) ein Wegeventil (74) ist, dessen Schieber in eine Position vorgespannt ist, in der die Druckhaltefunktion nicht freigegeben ist, und dass eine entgegengesetzte Steuerfläche des Freigabeschaltventils (74) mit einer Leitung (73) der Druckhalteeinrichtung (70) verbunden ist, in der der höhere Kupplungsdruck vorherrscht.

20. Hydraulikkreis nach einem der Ansprüche 17 bis 19, **dadurch gekennzeichnet, dass** das Freigabeschaltventil handbetätigbar ist.

21. Hydraulikkreis nach einem der Ansprüche 17 bis 20, **dadurch gekennzeichnet, dass** das Freigabeschaltventil (74) mit einem Wählhebel (80) des Doppelkupplungsgetriebes (12) derart gekoppelt ist, dass die Freigabe der Druckhaltefunktion in Abhängigkeit von der Stellung des Wählhebels (80) erfolgt.

22. Hydraulikkreis nach einem der Ansprüche 17 bis 21, **dadurch gekennzeichnet, dass** ein Parksperrenzylinder (90) zwischen dem Freigabeschaltventil (74) und dem Zentralventil (42) angeschlossen ist

## Claims

1. A hydraulic circuit (10) for a dual clutch transmission (12) for motor vehicles, comprising a first and a second clutch (16, 18) that can be hydraulically actuated, a first and a second pressure control valve (34, 36) for regulating the clutch pressure (52, 54) of the first and second clutches (16, 18), and a single central valve (42; 96; 104; 110), which in a first position (c) connects the pressure control valves (34, 36) to the respective clutches (16, 18) and in a second position (a) disengages the pressure control valves (34, 36) from the respective clutches (16, 18),
**characterized in that** a hydraulic circuit portion between the central valve (42; 96; 104; 110) and the clutches (16, 18) has at least one pressure limiting valve (62) for limiting the clutch pressure (52, 54).

2. The hydraulic circuit as claimed in claim 1, **characterized in that** the central valve (42; 96; 104; 110) is a directional control valve.

3. The hydraulic circuit as claimed in claim 1 or 2, **characterized in that** the central valve (42; 96; 110) is biased into the second position (a) by means of an energy store (44).

4. The hydraulic circuit as claimed in claim 1 or 2, **characterized in that** the central valve (104) is biased into the first position (c) by means of an energy store (44).

5. The hydraulic circuit as claimed in one of claims 1 to 4, **characterized in that** the central valve (42; 96; 104; 110) in the second position (a) also provides a pressure maintaining operating path (72) between a line pressure side (32) and a pressure maintaining device (70), which is designed for the purpose of maintaining the pressure (52, 54) of one of the clutches (16, 18) in emergency operation.

6. The hydraulic circuit as claimed in claim 5, **characterized in that** the pressure maintaining device (70) has a pressure comparison device (56; 84), which compares the first clutch pressure (52) and the second clutch pressure (54) with each other and connects the clutch (16, 18) with the higher clutch pressure (emergency clutch) to the pressure maintaining operating path (72).

7. The hydraulic circuit as claimed in claim 6, **characterized in that** the pressure comparison device (56; 84) has a comparison valve (56; 84), which can be hydraulically actuated by mutually opposite control surfaces, which are connected to the first and second clutch pressures (52, 54).

8. The hydraulic circuit as claimed in claim 5, **characterized in that** the pressure maintaining device (70) has a shifting state comparison device (114), which compares the shifting states of a first and a second transmission branch (20, 22) of the dual clutch transmission (12) with each other and connects to the pressure maintaining operating path (72) the clutch (16, 18) whose assigned transmission branch (20, 22) has a specific shifting state (emergency clutch).

9. The hydraulic circuit as claimed in claim 5, **characterized in that** the pressure maintaining device always selects one particular one of the two clutches as the emergency clutch in emergency operation.

10. The hydraulic circuit as claimed in one of claims 6 to 9, **characterized in that** the pressure maintaining device (70) depressurizes the clutch (16, 18) that is respectively not selected as the emergency clutch.

11. The hydraulic circuit as claimed in claim 5, **characterized in that** the pressure maintaining device (70) has the pressure limiting valve (62).

12. The hydraulic circuit as claimed in claim 11, **characterized in that** the pressure limiting valve (62) is arranged between the central valve (42; 96; 104; 110) and the comparison device (56; 84; 114) and, in the first position (c) of the central valve (42; 96; 104; 110), respectively limits the higher clutch pressure (52, 54) by means of the comparison device (56; 84; 114).

13. The hydraulic circuit as claimed in one of claims 5 to 12, **characterized in that** the pressure maintaining operating path (72) in the pressure maintaining device (70) is connected in parallel via an emergency throttle (76; 100) to a hydraulic circuit portion (78) of lower pressure.

14. The hydraulic circuit as claimed in claim 13, **characterized in that** the hydraulic circuit portion (78) of lower pressure is a clutch cooling portion (78).

15. The hydraulic circuit as claimed in claim 13 or 14, **characterized in that** the parallel connection to the emergency throttle (76) is set up within the central valve (42).

16. The hydraulic circuit as claimed in claim 13 or 14, **characterized in that** the emergency throttle (100) is arranged in a branch which can be released by an emergency throttle release valve (98), which is activated in parallel with the central valve (96).

17. The hydraulic circuit as claimed in one of claims 5 to 16, **characterized in that** a release shift valve (74), which releases the pressure maintaining function when safety allows, is arranged between the line pressure side (32) and the central valve (42; 96; 104; 110).

18. The hydraulic circuit as claimed in claim 17, **characterized in that** the release shift valve (74) releases the pressure maintaining function when the higher clutch pressure (52, 54) is greater than a first threshold value.

19. The hydraulic circuit as claimed in claim 17 or 18, **characterized in that** the release shift valve (74) is a directional control valve (74), the slide of which is biased into a position in which the pressure maintaining function is not released, and **in that** an opposed control surface of the release shift valve (74) is connected to a line (73) of the pressure maintaining device (70) in which the higher clutch pressure prevails.

20. The hydraulic circuit as claimed in one of claims 17 to 19, **characterized in that** the release shift valve can be manually actuated.

21. The hydraulic circuit as claimed in one of claims 17 to 20, **characterized in that** the release shift valve (74) is coupled to a selection lever (80) of the dual clutch transmission (12) in such a way that the release of the pressure maintaining function takes place in dependence on the position of the selection lever (80).

22. The hydraulic circuit as claimed in one of claims 17 to 21, **characterized in that** a parking lock cylinder (90) is connected between the release shift valve (74) and the central valve (42).

## Revendications

1. Circuit hydraulique (10) pour une boîte de vitesses (12) à double embrayage destinée à des véhicules automobiles, comprenant des premier et second accouplements (16, 18) actionnables hydrauliquement; des première et seconde vannes (34, 36) régulatrices de pression, pour réguler la pression d'accouplement respective (52, 54) du premier ou du second accouplement (16, 18) ; et une vanne centrale individuelle (42 ; 96 ; 104 ; 110) qui, dans une première position (c), relie les vannes (34, 36) régulatrices de pression aux accouplements considérés (16, 18) et sépare, dans une seconde position (a), lesdites vannes (34, 36) régulatrices de pression d'avec lesdits accouplements considérés (16, 18),
**caractérisé par le fait**
**qu'**un tronçon du circuit hydraulique, situé entre la vanne centrale (42 ; 96 ; 104 ; 110) et les accouplements (16, 18), présente au moins une vanne (62) limitatrice de pression pour limiter la pression d'accouplement (52, 54).

2. Circuit hydraulique selon la revendication 1, **caractérisé par le fait que** la vanne centrale (42 ; 96 ; 104 ; 110) est un distributeur.

3. Circuit hydraulique selon la revendication 1 ou 2, **caractérisé par le fait que** la vanne centrale (42 ; 96 ; 110) est précontrainte vers la seconde position (a) au moyen d'un accumulateur d'énergie (44).

4. Circuit hydraulique selon la revendication 1 ou 2, **caractérisé par le fait que** la vanne centrale (104) est précontrainte vers la première position (c) au moyen d'un accumulateur d'énergie (44).

5. Circuit hydraulique selon l'une des revendications 1 à 4, **caractérisé par le fait que**, dans la seconde position (a), la vanne centrale (42 ; 96 ; 104 ; 110) instaure en outre un trajet fonctionnel (72) de maintien de pression entre un côté (32) à pression de conduite et un dispositif (70) de maintien de pression conçu pour entretenir, en mode fonctionnement d'urgence, la pression (52, 54) de l'un des accouplements (16, 18).

6. Circuit hydraulique selon la revendication 5, **caractérisé par le fait que** le dispositif (70) de maintien de pression comporte un système (56 ; 84) comparateur de pressions qui compare l'une à l'autre la première pression d'accouplement (52) et la seconde pression d'accouplement (54) et relie, au trajet fonctionnel (72) de maintien de pression, l'accouplement (16, 18) présentant la pression d'accouplement supérieure (accouplement d'urgence).

7. Circuit hydraulique selon la revendication 6, **caractérisé par le fait que** le système (56 ; 84) comparateur de pressions présente une vanne comparatrice (56 ; 84) pouvant être actionnée hydrauliquement par des surfaces de commande mutuellement opposées et reliées, respectivement, à la première ou à la seconde pression d'accouplement (52, 54).

8. Circuit hydraulique selon la revendication 5, **caractérisé par le fait que** le dispositif (70) de maintien de pression comporte un système (114) comparateur d'états de commutation qui compare mutuellement les états de commutation de première et seconde ramifications de transmission (20, 22) de la boîte de vitesses (12) à double embrayage et qui relie, au trajet fonctionnel (72) de maintien de pression, l'accouplement (16, 18) (accouplement d'urgence) dont la ramification de transmission associée (20, 22) présente un état de commutation déterminé.

9. Circuit hydraulique selon la revendication 5, **caractérisé par le fait que** le dispositif de maintien de pression sélectionne toujours en mode fonctionnement d'urgence, en tant qu'accouplement d'urgence, un accouplement déterminé au sein des deux accouplements.

10. Circuit hydraulique selon l'une des revendications 6 à 9, **caractérisé par le fait que** le dispositif (70) de maintien de pression neutralise la pression de l'accouplement (16, 18) qui n'est respectivement pas sélectionné en tant qu'accouplement d'urgence.

11. Circuit hydraulique selon la revendication 5, **caractérisé par le fait que** le dispositif (70) de maintien de pression comporte la vanne (62) limitatrice de pression.

12. Circuit hydraulique selon la revendication 11, **caractérisé par le fait que** la vanne (62) limitatrice de pression est interposée entre la vanne centrale (42 ; 96 ; 104 ; 110) et le système comparateur (56 ; 84 ; 114) et limite respectivement la pression d'accouplement supérieure (52, 54), dans la première position (c) de ladite vanne centrale (42 ; 96 ; 104 ; 110), par l'intermédiaire dudit système comparateur (56 ; 84 ; 114).

13. Circuit hydraulique selon l'une des revendications 5 à 12, **caractérisé par le fait que** le trajet fonctionnel (72) de maintien de pression est relié en parallèle dans le dispositif (70) de maintien de pression, par l'intermédiaire d'un étranglement d'urgence (76 ; 100), à un tronçon (78) dudit circuit hydraulique dans lequel règne une pression inférieure.

14. Circuit hydraulique selon la revendication 13, **caractérisé par le fait que** le tronçon (78) dudit circuit hydraulique, à pression inférieure, est un tronçon (78) de refroidissement de l'embrayage.

15. Circuit hydraulique selon la revendication 13 ou 14, **caractérisé par le fait que** la liaison en parallèle, avec l'étranglement d'urgence (76), est établie à l'intérieur de la vanne centrale (42).

16. Circuit hydraulique selon la revendication 13 ou 14, **caractérisé par le fait que** l'étranglement d'urgence (100) est situé dans une ramification pouvant être validée par une vanne (98) qui libère ledit étranglement d'urgence et est activée en parallèle avec la vanne centrale (96).

17. Circuit hydraulique selon l'une des revendications 5 à 16, **caractérisé par le fait qu'**une vanne de validation (74), interposée entre le côté (32) à pression de conduite et la vanne centrale (42 ; 96 ; 104 ; 110), valide la fonction de maintien de pression lorsque la sûreté l'autorise.

18. Circuit hydraulique selon la revendication 17, **caractérisé par le fait que** la vanne de validation (74) valide la fonction de maintien de pression lorsque la pression d'accouplement supérieure (52, 54) excède une première valeur de seuil.

19. Circuit hydraulique selon la revendication 17 ou 18, **caractérisé par le fait que** la vanne de validation (74) est un distributeur (74) dont le tiroir est précontraint vers un emplacement auquel la fonction de maintien de pression n'est pas validée ; et **par le fait qu'**une surface de commande opposée de ladite vanne de validation (74) est reliée à une conduite (73) du dispositif (70) de maintien de pression dans laquelle prédomine la pression d'accouplement supérieure.

20. Circuit hydraulique selon l'une des revendications 17 à 19, **caractérisé par le fait que** la vanne de validation est actionnable à la main.

21. Circuit hydraulique selon l'une des revendications 17 à 20, **caractérisé par le fait que** la vanne de validation (74) est accouplée, à un levier sélecteur (80) de la boîtes de vitesses (12) à double embrayage, de façon telle que la validation de la fonction de maintien de pression ait lieu d'une manière tributaire de la position dudit levier sélecteur (80).

22. Circuit hydraulique selon l'une des revendications 17 à 21, **caractérisé par le fait qu'**un cylindre (90) de blocage en stationnement est raccordé entre la vanne de validation (74) et la vanne centrale (42).
